# EUROPÄISCHE PATENTSCHRIFT

(11) **EP 2 803 978 B1**
(45) Veröffentlichungstag und Bekanntmachung des Hinweises auf die Patenterteilung: **21.12.2022**
(21) Anmeldenummer: 14167997.7
(22) Anmeldetag: 13.05.2014
(51) Int. Cl.: G01N 21/64, G02B 21/00, G02B 21/16, G02B 21/36, G02B 27/58

(54) **Verfahren zur 3D-hochauflösenden Lokalisierungsmikroskopie**
Method for high resolution 3D locating microscopy
Procédé de localisation par microscopie 3D à haute résolution

(30) Priorität: 14.05.2013 DE 102013208927
(43) Veröffentlichungstag der Anmeldung: 19.11.2014
(73) Patentinhaber: Carl Zeiss Microscopy GmbH, 07745 Jena (DE)
(72) Erfinder: Ritter, Jörg, 07749 Jena (DE); Siebenmorgen, Jörg, 07743 Jena (DE); Kalkbrenner, Thomas, 07745 Jena (DE)
(74) Vertreter: Loritz, Rainer

(56) Entgegenhaltungen:
- DE-A1-102009 043 744
- DE-A1-102009 060 793
- DE-A1-102010 044 013
- BO HUANG ET AL: "Super-Resolution Fluorescence Microscopy", ANNUAL REVIEW OF BIOCHEMISTRY, Bd. 78, Nr. 1, Juni 2009 (2009-06), Seiten 993-1016, XP55137847, ISSN: 0066-4154, DOI: 10.1146/annurev.biochem.77.061906.092014
- Jörg G Ritter ET AL: "A cylindrical zoom lens unit for adjustable optical sectioning in light sheet microscopy", Biomed. Opt. Express, Januar 2011 (2011-01), Seiten 185-193, XP55137864, Gefunden im Internet: URL:http://www.ncbi.nlm.nih.gov/pmc/articl es/PMC3028493/pdf/boe-2-1-185.pdf [gefunden am 2014-09-02]

## Beschreibung

Die Erfindung bezieht sich auf ein Verfahren zur 3D-hochauflösenden Lokalisierungsmikroskopie gemäss Anspruch 1, bei dem eine Probe verwendet wird, die eine abbildungsseitige Begrenzungsfläche aufweist, in einem Anregungsschritt die Probe mit Anregungsstrahlung beleuchtet wird, um in der Probe Fluoreszenzmarker zum Leuchten anzuregen, in einem Abbildungsschritt die Probe mittels einer Abbildungsoptik längs einer Abbildungsrichtung in ein Einzelbild abgebildet wird, wobei das Einzelbild Abbilder der leuchtenden Fluoreszenzmarker enthält und die Abbildungsoptik eine optische Auflösung aufweist, der Anregungs- und der Abbildungsschritt mehrmals wiederholt werden und so mehrere Einzelbilder erzeugt werden, wobei die Anregungsschritte so ausgeführt werden, dass zumindest für einen Teil der leuchtenden Fluoreszenzmarker deren Abbilder in jedem der Einzelbilder isoliert sind, in den erzeugten, mehreren Einzelbildern aus den isolierten Abbildern der leuchtenden Fluoreszenzmarker jeweils eine Ortsangabe des entsprechenden Fluoreszenzmarkers ermittelt wird, die eine Genauigkeit hat, welche über die optische Auflösung hinausgeht, aus den so ermittelten Ortsangaben ein hochaufgelöstes Gesamtbild erzeugt wird.

Im Stand der Technik sind verschiedene Verfahren zur Überwindung der Beugungsgrenze in der Mikroskopie entwickelt worden. Aus der WO 2006/0127692 oder der DE 102006021317 A1 ist ein mit PALM (photo activated localisation microscopy) abgekürztes Verfahren bekannt, das zur Abbildung einer Probe eine Markierungssubstanz verwendet, welche mittels optischer Strahlung aktiviert werden kann. Nur im aktivierten Zustand kann die Markierungssubstanz bestimmte Fluoreszenzstrahlung abgeben. Nicht aktivierte Moleküle der Markierungssubstanz senden auch nach Einstrahlung von Anregungsstrahlung keine oder zumindest keine merkliche Fluoreszenzstrahlung mit den festgelegten Eigenschaften ab. Man bezeichnet deshalb die Aktivierungsstrahlung allgemein als Umschaltsignal. Im PALM-Verfahren wird das Umschaltsignal so aufgebracht, dass zumindest einige der aktivierten Markierungsmoleküle von benachbarten, aktivierten Markierungsmolekülen so beabstandet sind, dass sie gemessen an der optischen Auflösung der Mikroskopie getrennt oder nachträglich durch Bildverarbeitungsverfahren trennbar sind. Man spricht davon, dass Fluoreszenzmarker isoliert werden, und bezeichnet diesen Schnitt auch als Isolierungsschritt. Es genügt dabei, dass eine Teilmenge der Gesamtmenge der Fluoreszenzmarker isoliert ist. Die Probe wird so abgebildet; man erhält ein Einzelbild der Probe, in dem zumindest einige Fluoreszenzmarker isoliert leuchten. Dann wird für jeden Fluoreszenzmarker das Zentrum der registrierten Strahlungsverteilung ermittelt, die auflösungsbegrenzt bedingt natürlich nicht punktförmig ist. Auf diese Weise wird rechnerisch die Lage des Fluoreszenzmarkers mit höherer Genauigkeit lokalisiert, als es die optische Auflösung eigentlich zulässt. Dieser Schritt wird als Lokalisierungsschritt bezeichnet.

Die Schritte der Isolierung und der Lokalisierung werden wiederholt durchgeführt, so dass man mehrere Einzelbilder erhält. Idealerweise ist jeder Fluoreszenzmarker einmal in mindestens einem Einzelbild isoliert. Die aus den Einzelbildern ermittelten Ortsangaben erlauben es, ein Gesamtbild zu erzeugen, das die Ortsangaben der einzelnen Fluoreszenzmarker jeweils mit einer über die optische Auflösung hinausgehenden Genauigkeit enthält. Ein solches Bild, das eine über die optische Auflösung gesteigerte Genauigkeit hat, wird als hochauflösend bezeichnet.

Zum Isolieren der Fluoreszenzmarker nutzt das PALM-Prinzip statistische Effekte aus. Bei einem Fluoreszenzmarker, der durch das Umschaltsignal mit gegebener Intensität zur Fluoreszenzstrahlung aktivierbar ist, kann durch Einstellen der Intensität des Umschaltsignals dafür gesorgt werden, dass die Wahrscheinlichkeit, in einem gegebenen Flächenbereich der Probe vorhandene Fluoreszenzmarker zu aktivieren, so gering ist, dass es ausreichend Teilbereiche in der abgebildeten Probe gibt, in denen innerhalb der optischen Auflösung zumindest einige isolierte Fluoreszenzmarker zur Abgabe von Fluoreszenzstrahlung angeregt werden können. Die Anregung der derart aktivierten Probe führt dann zu isoliert leuchtenden Fluoreszenzmarkern.

Das PALM-Prinzip wurde hinsichtlich der Aktivierung, d. h. der Aufbringung des Umschaltsignals weitergebildet. So ist beispielsweise bei Molekülen, die einen langlebigen, nicht fluoreszierenden Zustand und einen kurzlebigen, fluoreszierenden Zustand aufweisen, ein separates Aktivieren mit spektral von der Anregungsstrahlung abweichender Aktivierungsstrahlung gar nicht erforderlich. Vielmehr wird die Probe zuerst mit Anregungsstrahlung hoher Intensität so beleuchtet, dass der weit überwiegende Anteil der Moleküle in den nicht fluoreszenzfähigen, langlebigen Zustand (z. B. einen Triplet-Zustand) gebracht wird. Die verbliebenen, dann noch fluoreszierenden Moleküle sind dann zumindest zum Teil isoliert.

Das PALM-Prinzip hat in der Fachliteratur mittlerweile auch andere Abkürzungen erhalten, wie beispielsweise STORM etc. In dieser Beschreibung wird die Abkürzung PALM zur Identifizierung aller Mikroskopietechniken verwendet, die eine Hochauflösung erreichen, indem Fluoreszenzmarker zuerst isoliert und dann lokalisiert werden. Das PALM-Verfahren hat den Vorteil, dass für die Anregung keine hohe Ortsauflösung benötigt wird. Eine einfache Weitfeldbeleuchtung ist möglich.

Das PALM-Prinzip erreicht die Hochauflösung in 2D bzw. lateral, d. h. quer zur Abbildungsrichtung, da die Lokalisierung nur für Fluoreszenzmarker erfolgen kann, die in Projektion auf ein senkrecht zur Abbildungsrichtung liegenden Ebene isoliert sind. Fluoreszenzmarker, die längs der Abbildungsrichtung, also in Tiefenrichtung, hintereinander liegen, können mit dem PALM-Prinzip per se nicht unterschieden werden. Die ersten experimentellen Realisierungen des PALM-Verfahrens verwendeten deshalb eine TIRF-Beleuchtung, um sicherzustellen, dass lediglich aus einem scharf definierten Tiefenbereich, der deutlich geringer ist als die Tiefenschärfe der verwendeten Abbildungsoptik, Fluoreszenzmarker angeregt werden. Eine Tiefenauflösung im Sinne der Zuordnung von Fluoreszenzmarkern zu unterschiedlichen Tiefenpositionen fand nicht statt.

Der Stand der Technik hat jedoch zwischenzeitlich weitere Verfahren und Ansätze hervorgebracht, welche eine 3D-Lokalisierungsmikroskopie erreichen, bei der Fluoreszenzmarker auch in der dritten Raumrichtung, also bezogen auf die Abbildung in Tiefenrichtung, isoliert und lokalisiert werden.

Einen anderen Ansatz verfolgt die Veröffentlichung von Shtengel et al, PNAS 106, Seite 3125, 2009. Dort werden Photonen, welche die leuchtenden Fluoreszenzmarker emittieren, mit sich selbst zur Interferenz gebracht. Dazu werden zwei, in 4π-Konfiguration montierte Objektive verwendet, welche die leuchtenden Fluoreszenzmarker gleichzeitig beobachten. Mittels eines speziellen 3-Wege-Strahlteilers wird die Strahlung aus den derart erhaltenen Teilstrahlgängen zur Interferenz gebracht. Jedes der erhaltenen Bilder wird mit einer Kamera detektiert, und die Intensitätsverhältnisse der Bilder geben Aufschluss über die Tiefenlage.

In der Veröffentlichung Toprak et al., Nanolet. 7, Seiten 3285-3290, 2009, sowie gemäß Juette et al., Nature Methods 5, Seite 527, 2008, wird ein 1:1-Strahlteiler in den Abbildungsstrahlengang eingebaut, der das Bild der Probe in zwei Teilbilder aufspaltet, die eigenständig detektiert werden. Zusätzlich wird in einem der Teilstrahlengänge nach dem Strahlteiler eine optische Weglängendifferenz dergestalt eingeführt, dass die beiden Teilstrahlengänge zwei Objektebenen abbilden, die etwa im die halbe oder ganze optische Mindestauflösung in Tiefenrichtung beabstandet sind. Die Tiefenlage eines Fluoreszenzmarkers, der zwischen diesen beiden Objektebenen liegt, erhält man aus der Analyse der zwei Teilbilder dieses Fluoreszenzmarkers (z. B. hinsichtlich der Breite der Punktbildverwaschung). Das Verfahren erfordert zwei hochaufgelöste Teilbilder und eine subpixelgenaue Überlagerung dieser beiden Teilbilder. Eine Weiterbildung dieses Ansatzes, welche den Justierungsaufwand drastisch herabsetzt, ist aus der DE 102009060490 A1 und aus DE 102009060793 A1 bekannt.

Ein Prinzip, eine Tiefeninformation bei der für die 3D-Lokalisierungsmikroskopie zu gewinnen, findet sich in der DE 102010044013 A1. Sie verwendet für die Anregungs- und/oder Umschaltstrahlung die sogenannte Lichtblattbeleuchtung, die beispielsweise in der Veröffentlichung P. Keller und E. Stelzer, "Quantitative In Vivo Imaging of Entire Embryos with Digital Scanned Laser Light Sheet Fluorescence Microscopy", Current Opinion in Neurobiology, 2009, Vol. 19, Seiten 1-9, beschrieben sind. Die Probe wird nacheinander durch zwei axial gegeneinander versetzte, jedoch überlappende Lichtblätter beleuchtet. Moleküle, die in beiden Lichtblattpositionen Fluoreszenzstrahlung abstrahlen, müssen zwangsläufig im Überlappbereich der beiden Lichtblattpositionen liegen. Es wird deshalb eine geeignete Filterung ausgeführt. Auf diese Weise kann die Tiefenauswahl deutlich über die Dicke des Lichtblattes hinaus gesteigert werden. Die Dicke des Überlappbereiches ist maßgebend für die Filterung. Nachteilig an diesem Ansatz ist es, dass für die Lokalisierung die doppelte Anzahl an Einzelbildern aufgenommen werden muss, nämlich für jede Lichtblattposition die Anzahl an Einzelbildern, die man bei der herkömmlichen PALM-Abbildung benötigen würde. Auch ist das präzise Einstellen des Versatzes der Lichtblätter und insbesondere die Reproduzierbarkeit der Verstellung wesentlich für die Dicke des Überlappbereiches und damit für die Tiefenauflösung. Schließlich kann innerhalb des herausgefilterten Überlappbereiches in der Regel keine sinnvolle Auflösung mehr erfolgen.

Die Publikation B. Huang et al., Science 319, Seite 810, 2008, beschreibt für das PALM-Prinzip einen Abbildungsstrahlengang, in dem eine schwache Zylinderlinse liegt, die zu einer gezielten astigmatischen Verzeichnung im Bild führt. Dadurch wird das Abbild jedes Fluoreszenzmarkers auf der Kamera elliptisch verzerrt, sobald sich der Fluoreszenzmarker ober- oder unterhalb der Fokusebene befindet, welche einen Symmetriepunkt der Punktbildverwaschungsfunktion der Abbildung der Probe darstellt. Aus der Orientierung und der Stärke der Verzerrung lässt sich eine Information über die Tiefenlage des leuchtenden Fluoreszenzmarkers gewinnen. Ein Nachteil dieses Verfahrens liegt darin, dass bei einem molekularen Dipol auch dessen lokale Umgebung und Orientierung zu einer Verzerrung des Bildes des leuchtenden Fluoreszenzmarkers führen kann, die allerdings mit der Tiefenlage nichts zu tun hat. Solche leuchtende Fluoreszenzmarker erhalten dann, je nach ihrer räumlichen Lage, einen falschen Tiefenwert.

Ein weiteres Prinzip der Tiefenauflösung bei der Lokalisierungsmikroskopie verfolgt die bewusste Verzerrung der Punktbildverwaschungsfunktion (nachfolgend auch als PSF abgekürzt) der Abbildung. Ein solcher Ansatz ist beispielsweise in der WO 2012/039636 beschrieben, die bei der Abbildung der Probe so modifiziert, dass eine Bildverzeichnung entsteht, welche tiefenlagenabhängig ist. Beispielsweise wird die Punktbildverwaschungsfunktion in eine Art Helixstruktur modifiziert, so dass für die Abbildung eines leuchtenden Punktes anstelle eines Beugungsscheibchens zwei nebeneinanderliegende Lappen entstehen, deren Relativlage, beispielsweise Drehlage von der Tiefenlage des abgebildeten leuchtenden Punktes abhängt.

Bei der PAL-Mikroskopie kann eine unerwünschte Bestrahlung der Fluoreszenzmarker nachteilig sein, da die Fluoreszenzmarker oftmals nur eine sehr begrenzte Anzahl an Aktivierungs- und/oder Anregungszyklen durchlaufen können. Unerwünscht ist in diesem Sinne jede Bestrahlung, die nicht für eine hochauflösende Abbildung ausgenutzt wird.

Die Verzerrung der Punktbildverwaschungsfunktion ist hinsichtlich der Lokalisierung der Fluoreszenzmarker nachteilig. Zum einen steigt der Rechenaufwand, um das Zentrum des verzerrten Abbildes eines Fluoreszenzmarkers zu isolieren. Zum anderen können möglicherweise Abbilder von Fluoreszenzmarkern nicht mehr getrennt werden, die bei einer unverzerrten, d. h. idealen PSF noch trennbar wären. Dies hat zur Folge, dass unter Umständen mehr Einzelbilder benötigt werden, also eine Bestrahlung der Fluoreszenzmarker stattfindet, die eigentlich unerwünscht ist.

Der Erfindung liegt deshalb die Aufgabe zugrunde, ein Verfahren für PAL-Mikroskopie anzugeben, das eine dreidimensionale Hochauflösung erlaubt und die Bestrahlung der Fluoreszenzmarker möglichst minimiert. Auch sollte der Rechenaufwand zur Lokalisierung der Fluoreszenzmarker möglichst geringgehalten werden.

Die Aufgabe wird erfindungsgemäß gelöst durch ein Verfahren der eingangs genannten Art, dass dadurch gekennzeichnet ist, dass die Abbildungsoptik genau eine Fokusebene aufweist und so eingestellt wird, dass die Fokusebene in Abbildungsrichtung außerhalb der Probe zwischen der Begrenzungsfläche und der Abbildungsoptik liegt, und in den Einzelbildern die isolierten Abbilder der leuchtenden Fluoreszenzmarker hinsichtlich ihrer Größe analysiert werden und aus der Größe eine Angabe über eine Tiefenlage, die angibt, wie weit der entsprechende leuchtende Fluoreszenzmarker längs der Abbildungsrichtung unter der Begrenzungsfläche liegt, abgeleitet wird.

Unter einem Fluoreszenzmarker wird in dieser Beschreibung ein Fluoreszenzemitter verstanden, der für die Lokalisierungsmikroskopie tauglich ist, also dazu eingesetzt werden kann, einzelne Fluoreszenzmarker bezogen auf die optische Auflösung isoliert zum Leuchten zu bringen. Der Begriff Fluoreszenzmarker soll dabei sowohl Fälle umfassen, in denen Strukturen in einer Probe mit entsprechenden Stoffen markiert werden, als auch Fälle, in denen die Probe bereits von sich aus die geeigneten Fluoreszenzeigenschaften hat.

Die Erfindung nutzt die Tatsache, dass auch bei einer idealen, beugungsbegrenzten Abbildung der leuchtenden Fluoreszenzmarker die Größe jedes Abbildes vom Abstand zur Fokusebene der Abbildung abhängt. In der Fokusebene wird das kleinstmögliche Abbild erhalten, der beugungsbegrenzte Spot. Weicht man von der Fokusebene ab, liegen also Fluoreszenzmarker oberhalb oder unterhalb der Fokusebene, wird das Abbild größer. Aus der Größe der Abbildung kann per se - und dies ist der Grund für asymmetrische Verzerrungen der Punktbildverwaschungsfunktion im Stand der Technik - die Richtung, d. h. ob ein leuchtender Fluoreszenzemitter über oder unter der Fokusebene liegt, nicht abgeleitet werden.

Die Erfindung sieht deshalb vor, die Fokusebene bewusst oberhalb der Begrenzungsfläche der Probe zu legen. Hier befinden sich keine Fluoreszenzemitter. Es ist deshalb klar, dass alle Fluoreszenzemitter unterhalb (bezogen auf die Abbildungsrichtung) der Begrenzungsfläche der Probe liegen. Die Größe des Abbildes eines leuchtenden Fluoreszenzemitters gibt damit nicht nur den Abstand von der Fokusebene, sondern auch die Richtung an. Die an und für sich gegebene Symmetrie ist somit gebrochen.

Durch dieses einfache Vorgehen kann die Erfindung eine Tiefenangabe für leuchtende Fluoreszenzmarker gewinnen, ohne dass die Punktbildverwaschungsfunktion der Abbildung modifiziert werden müsste oder eine aufwendige Beleuchtung (beispielsweise Lichtblattbeleuchtung) zwingend erforderlich wäre.

Der erfindungsgemäße Ansatz kann vielmehr sogar eine normale Weitfeldbeleuchtung durch das für die Abbildung verwendete Objektiv einsetzen, um die Fluoreszenzmarker isoliert zum leuchten zu bringen. Natürlich kann optional für die Beleuchtung ein Lichtblatt verwendet werden.

Die Richtungsangabe ist dadurch erreicht, dass die Fokusebene in einem Bereich liegt, in dem keine Probe ist. Für nicht mit Deckglas abzudeckende Proben gilt deshalb, dass die Fokusebene oberhalb der Probenoberfläche und folglich außerhalb der Probe angeordnet wird. Bei der Verwendung einer Probe, die mit einem Deckglas abgedeckt wird, kann die Fokusebene in das Deckglas gestellt werden. Bei der Verwendung einer Probe, die sich in einer Küvette befindet, kann die Fokusebene in den Küvettenboden gelegt werden. Wesentlich ist, dass sie in einem Bereich liegt, der jenseits einer Probengrenzfläche (in Abbildungsrichtung gesehen) liegt. Soweit hier in diesem Zusammenhang die Begriffe "über" oder "unter" verwendet werden, darf dies nicht als Einschränkung auf eine bestimmte Ausrichtung von Mikroskop oder Probe verstanden werden. Die Begriffe sind vielmehr durchgängig auf die Abbildungsrichtung der Probe zu verstehen. Abschnitte über der Fokusebene sind damit Bereiche, die zwischen der Fokusebene und der Abbildungsoptik liegen. Abschnitte, die unter der Fokusebene liegen, liegen dann so, dass sich die Fokusebene zwischen diesen Bereichen und der Abbildungsoptik befindet.

Die Erfindung wertet zur axialen Ortsangabe die Größe der Abbilder der isoliert leuchtenden Fluoreszenzmarker aus. Diejenigen Abbilder, welche die kleinsten Größen haben, befinden sich unmittelbar an der Begrenzungsfläche. Sie können als Bezugswert für die Abstandermittlung verwendet werden. Es ist also in einer Weiterbildung bevorzugt, die Größe der Abbilder auf eine kleinste Größe zu beziehen, die in den Einzelbildern erscheint. Diese kleinste Größe kennzeichnet die axiale Lage der Begrenzungsfläche.

Die Größe eines Abbildes kann in einer besonders rechensparenden Ausführung dadurch ausgewertet werden, dass die Fläche ermittelt wird. Bei der Flächenberechnung kann ein Mindestintensitätswert angesetzt werden, um die Grenze des Abbildes zu bestimmen. Die Fläche wird mit der Tiefenlage, d. h. dem Abstand zur Probenoberfläche verknüpft. Die verwendete Verknüpfung kann in einer Tabelle hinterlegt sein oder einer Funktion genügen, wobei Tabelle oder Funktion zuvor experimentell anhand einer Probe mit bekannter Tiefenstruktur ermittelt wurde. Kombiniert man diesen Ansatz mit der bereits erwähnten Berücksichtigung der kleinsten Größe der Abbilder, dient diese kleinste Größe zur Ermittlung des Ausgangspunktes in der Tabelle oder dem funktionalen Zusammenhang. In einer besonders bevorzugten Ausführungsform gibt der Zusammenhang die relative Tiefenlage bezogen auf die Probenoberfläche als Funktion der Differenz zwischen ermittelter Größe und kleinster Größe an.

Alternativ zur Fläche kann auch eine maximale Abmessung oder ein minimaler Querschnitt des Abbildes als Maß für die Größe herangezogen werden.

Eine besonders präzise Auswertung der Größe berücksichtigt die Punktbildverwaschungsfunktion der Abbildung. Diese Punktbildverwaschungsfunktion kann experimentell erfasst werden, wie dies im Stand der Technik anderweitig bereits beschrieben ist, indem das Abbild eines Punktemitters bestimmt wird. Dies kann experimentell oder durch Modellierung geschehen, und man erhält ein Volumen, in das die Strahlung des leuchtenden Punktemitters gestreut wird. In diesem Punktverwaschungsabbild wird nun eine Schnittebene gesucht, die die bestmögliche Annäherung an das Abbild eines tatsächlichen, leuchtenden Fluoreszenzmarkers ist. Die Lage der Schnittebene gibt die Tiefenlage an. So kann optional auch die x,y-Koordinate ermittelt werden.

Gleichbedeutend mit diesem Ansatz ist es, das Punktverwaschungsabbild so in der Bildebene des Einzelbildes zu verschieben, dass das derart enthaltene Schnittbild des Punktverwaschungsbildes eine bestmögliche Übereinstimmung zum Abbild des betrachteten, leuchtenden Fluoreszenzmarkers hat. Auf diese Weise kann nicht nur die Tiefenlage des Fluoreszenzemitters, sondern optional auch die x,y-Koordinate ermittelt werden, da aus der vorherigen Ermittlung des Punktverwaschungsbildes bekannt ist, wo innerhalb des Volumens der punktförmige Fluoreszenzemitter liegen muss. Dieses, zuvor bekannte Zentrum des Punktverwaschungsabbildes ist dann die Lage des betrachteten Fluoreszenzemitters in drei Koordinaten mit einer Auflösung, die weitaus höher ist, als die Beugungsgrenze eigentlich erlaubt.

Zur Bildanalyse kommen dieselben Algorithmen zur Anwendung, die im Stand der Technik zur Lokalisierung verwendet werden.

Die Erfindung wird nachfolgend unter Bezugnahme auf die Zeichnung beispielhalber noch näher erläutert. In der Zeichnung zeigt:
- Fig. 1a und b: Schemadarstellungen eines aktivierten Markermoleküls in einem auflösungsbegrenzten Volumen;
- Fig. 2: eine Schemadarstellung der Abbildung verschiedener aktivierter und nicht-aktivierter Markermoleküle auf einen ortsauflösenden Detektor,
- Fig. 3: ein Ablaufdiagramm für die Bilderzeugung im PALM-Verfahren,
- Fig. 4: zum Ablaufdiagramm der Fig. 3 gehörende Erläuterungsdarstellungen von auf den Detektor der Fig. 2 abgebildeten Markermolekülen,
- Fig. 5: ein Schemadarstellung eines Mikroskop zur PAL-Mikroskopie, und
- Fig. 6: einen Ausschnitt der Abbildung einer Probe zur Tiefenauflösung.

Elemente, die sich funktionell oder strukturell in den unterschiedlichen Figuren entsprechen, sind durchgängig mit denselben Bezugszeichen versehen, um eine Beschreibungswiederholung zu vermeiden.

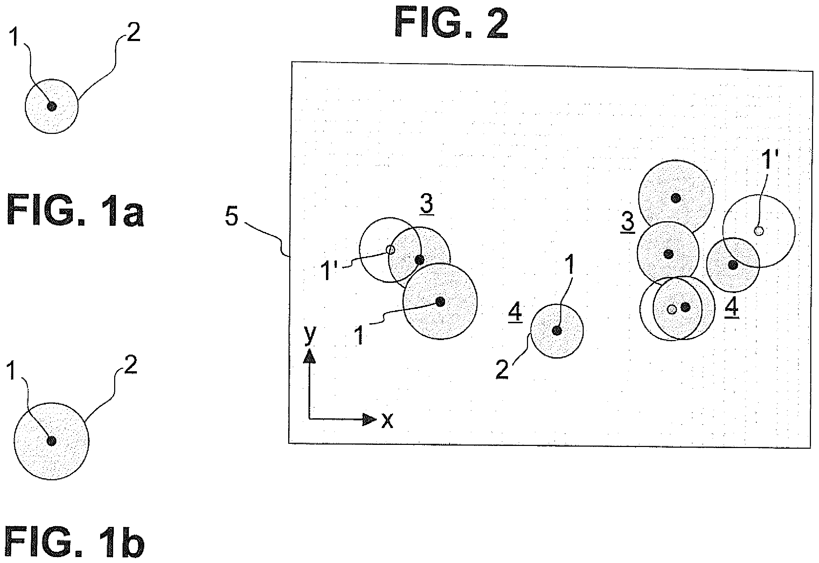

Fig. 1a zeigt schematisch ein Markermolekül 1, das zur Fluoreszenz angeregt wurde. Das leuchtende Markermolekül 1 kann in einem Mikroskop aufgrund physikalischer Prinzipien lediglich mit einer begrenzten optischen Auflösung detektiert werden. Selbst wenn das Mikroskop die Beugungsgrenze der optischen Auflösung erreicht, werden die Photonen des leuchtenden Markermoleküls 1 immer noch beugungsbedingt gestreut, und das Markermolekül 1 wird als Beugungsscheibchen 2 detektiert. Das Mikroskop gibt also prinzipiell statt der geometrischen Ausdehnung des Markermoleküls 1, die in Fig. 1 schematisch als schwarzer Kreis gezeichnet ist, als Abbild ein größeres Objekt wieder, das in Fig. 1 durch das Beugungsscheibchen 2 veranschaulicht ist. Die Größe des Beugungsscheibchens 2 hängt von der Güte der verwendeten Mikroskopieeinrichtung ab und ist durch die Halbwertsbreite der Punktbildverwaschungsfunktion der optischen Abbildung definiert. Die verwendete Optik muss aber nicht zwingend an der Beugungsgrenze arbeiten, auch wenn dies zu bevorzugen ist. Die Größe des Abbildes, also des Beugungsscheibchens 2 hängt weiter von der Fokussierung ab. Ist das abgebildete Markermolekül 1 nicht exakt in der Fokusebene, wird das Beugungsscheibchen 2 größer, wie Fig. 1b zeigt.

Um nun das Markermolekül 1 innerhalb des Beugungsscheibchens 2 genauer lokalisieren zu können, wird das oben bereits allgemein geschilderte PALM-Verfahren eingesetzt. Dieses aktiviert einzelne Markermoleküle, wobei in dieser Beschreibung ganz allgemein unter dem Begriff Aktivierung die Aktivierung bestimmter Lumineszenzeigenschaften der Markermoleküle verstanden wird, also sowohl ein Einschalten der Lumineszenzanregbarkeit als auch eine Änderung des Lumineszenzemissionsspektrum, was dem Einschalten bestimmter Lumineszenzeigenschaften entspricht. Im hier beschriebenen Ausführungsbeispiel wird die Aktivierung durch optische Aktivierungsstrahlung bewirkt. Es sind aber auch andere und insbesondere auch nicht-optische Aktivierungsmechanismen möglich.

Die Aktivierung erfolgt nun so, dass es zumindest einige aktivierte Moleküle gibt, die innerhalb des optischen Auflösung zumindest gerade noch unterschieden werden können. Dies sind isolierte Markermoleküle.

Fig. 2 zeigt als schematische Draufsicht eine exemplarische Situation in einem Einzelbild 5. Das Einzelbild 5 ist in der x/y-Ebene, die senkrecht zur optischen Achse der Abbildung steht, dargestellt. Wie zu sehen ist, gibt es Bereiche 3, in denen die Beugungsscheibchen 2 benachbarter Markermoleküle überlappen. Hierbei sind, wie im linken Bereich 3 der Fig. 2 zu sehen ist, jedoch lediglich diejenigen Markermoleküle 1 relevant, die zuvor aktiviert wurden. Nicht aktivierte Markermoleküle 1' geben die bestimmte Fluoreszenzstrahlung, welche für das Einzelbild 5 aufgefangen wurde, nicht ab, spielen also keine Rolle.

In einigen Bereichen, z. B. dem in der Mitte des Einzelbildes 5 gelegenen Bereich 4, liegen Markermoleküle 1 so, dass ihr Beugungsscheibchen 2 mit keinem Beugungsscheibchen eines anderen aktivierten Markermolekül 1 überlappt. Die rechte Seite des Einzelbildes 5 zeigt, dass Bereiche 3, in denen Beugungsscheibchen von aktivierten Markermolekülen überlappen, zu Bereichen 4, in denen dies nicht der Fall ist, durchaus benachbart liegen können. Der rechte Bereich 4 verdeutlicht zudem nochmals, dass die Nachbarschaft eines aktivierten Markermoleküls 1 zu einem nicht aktivierten Markermolekül 1' für die Detektion keine Rolle spielt, da ein solches Markermolekül 1' ja die für das Einzelbild 5 relevante Fluoreszenzstrahlung nicht abgibt, also nicht fluoresziert.

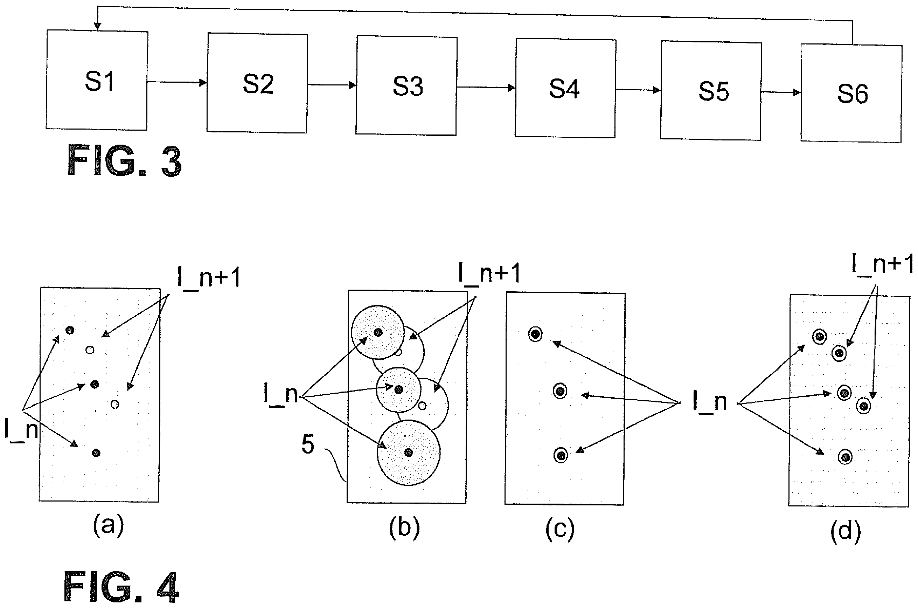

Zur Aufnahme eines jenseits der apparativ vorgegebenen optischen Auflösung detaillierten Bildes, das im Sinne dieser Beschreibung ein hochaufgelöstes Bild ist, werden nun die in Fig. 3 schematisch dargestellten Schritte eingesetzt.

In einem ersten Schritt S1 wird mittels eines Umschaltsignals eine Teilmenge der Markermoleküle aktiviert; sie werden von einem ersten Zustand, in dem sie zur Abgabe der bestimmten Fluoreszenzstrahlung nicht anregbar sind, in einen zweiten Zustand geschaltet, in dem sie zur Abgabe der bestimmten Fluoreszenzstrahlung anregbar sind. Natürlich kann das Aktivierungssignal auch eine selektive Deaktivierung bewirken, also in Schritt S1 auch ein inverses Vorgehen verwendet werden. Wesentlich ist, dass nach Schritt S1 lediglich ein Teil der Markermoleküle zur Abgabe der bestimmten Fluoreszenzstrahlung angeregt werden kann. Die Aktivierung bzw. Deaktivierung (nachfolgend wird zur Vereinfachung lediglich der Fall der Aktivierung geschildert) erfolgt abhängig von den verwendeten Markermolekülen oder inhärenten Probenmolekülen. Bei einem Farbstoff wie z. B. DRONPA, PA-GFP oder reversibel schaltbaren synthetischen Farbstoffen (wie Alexa/Cyan-Konstrukten) erfolgt die Aktivierung durch optische Strahlung, ist das Umschaltsignal also Umschaltstrahlung.

Die unter der Fig. 3 dargestellte Fig. 4 zeigt im Teilbild a den Zustand nach Schritt S1. Lediglich ein Teil der Markermoleküle ist aktiviert. Diese Markermoleküle bilden eine Menge l_n und sind mit einem voll ausgezeichneten schwarzen Punkt wiedergegeben. Die restlichen Markermoleküle sind in diesem Schritt nicht aktiviert worden. Diese Menge ist in Teilbild a der Fig. 4 mit I_n+1 bezeichnet. Als Fluoreszenzfarbstoffe werden vorzugsweise aus dem Stand der Technik bekannte fluoreszierende Proteine, wie PA-GFP oder auch DRONPA verwendet. Die Aktivierung erfolgt bei solchen Molekülen mit Strahlung im Bereich von 405 nm, die Anregung zur Fluoreszenzstrahlung bei einer Wellenlänge von etwa 488 nm, und die Fluoreszenzstrahlung liegt in einem Bereich oberhalb von 490 nm.

Damit in der Menge I_n möglichst wenige Beugungsscheibchen so überlappen, wodurch die Markermoleküle nicht unterscheidbar wären, wird die Aktivierung so eingestellt, dass in der Menge I_n möglichst viele Markermoleküle bezogen auf das mit der optischen Anordnung auflösbare Volumen isoliert sind.

Die Probe wird in einem zweiten Schritt S2 zur Abgabe von Fluoreszenzstrahlung angeregt. Damit kommen alle Markermoleküle, die aktiviert wurden, zum Leuchten.

In einem dritten Schritt S3 wird die so abgegebene Fluoreszenzstrahlung detektiert, beispielsweise durch Integration der aufgenommenen Fluoreszenzphotonen, so dass sich die im darunter liegenden Teilbild b der Fig. 4 dargestellte Situation für das Einzelbild 5 ergibt. Wie zu sehen ist, überlappen idealerweise die Beugungsscheibchen 2 aller leuchtenden Markermoleküle 1 nicht. Dann sind alle aktivierten Markermoleküle 1 isoliert. Die Größe der Beugungsscheibchen wird durch die optische Auflösung der Abbildung festgelegt und die Tiefenlage der Markermoleküle. Zusätzlich sind in Teilbild b der Fig. 4 (theoretische) Beugungsscheibchen von Fluoreszenzmolekülen eingezeichnet, die zur nicht-aktivierten Menge I_n+1 gehören. Da diese nicht-aktivierten Markermoleküle keine Fluoreszenzstrahlung abgeben, stört keine in deren (theoretischen) Beugungsscheibchen liegende Fluoreszenzstrahlung die Detektion der Fluoreszenzstrahlung der Menge I_n der leuchtenden Markermoleküle.

Natürlich kann es in der Menge I_n der aktivierten Markermoleküle 1 auch Markermoleküle 1 geben, die nicht isoliert sind. Diese nicht isolierten Markermoleküle 1 werden hinsichtlich der Ortsbestimmung nicht berücksichtigt. Es wird dazu in einem nachfolgenden Schritt S4 in der Menge I_n der aktivierten Markermoleküle 1 eine Filterung durchgeführt, welche diejenigen fluoreszierenden Markermoleküle 1 identifiziert, die hinsichtlich der Auflösung der Abbildung isoliert sind, wobei darunter zu verstehen ist, dass die Beugungsscheibchen 2 ggf. unter Zuhilfenahme rechnerischer Methoden getrennt werden können. Die Trennung ist dann möglich, wenn die Aussage getroffen werden kann, ob ein Beugungsscheibchen 2 von einem fluoreszierenden Markermolekül 1 oder von mehreren fluoreszierenden Markermolekülen 1 herrührt. Für die Ortsbestimmung, die als Lokalisierung bezeichnet wird, werden nur diejenigen fluoreszierenden Markermoleküle 1 herangezogen, die in der Filterung als isoliert identifiziert werden konnten. Im vierten Schritt S4 wird weiter die Lage der isolierten, leuchtenden Markermoleküle rechnerisch aus der Beugungsverteilung der Fluoreszenzscheibchen ermittelt, wodurch die Auflösung, mit der die Lage der isolierten Markermoleküle 1 bekannt ist, über die Auflösung der optischen Anordnung hinaus geschärft wird, wie das Teilbild c der Fig. 4 zeigt. Teilbild c zeigt nur die Lageangabe in der x/y-Ebene. Auf die z-Koordinate, also die Ortsangabe längs der Tiefenebene wird nachfolgend noch eingegangen werden.

Ein fünfter Schritt S5 setzt für die Markermoleküle, die lokalisiert wurden, nun die Ortsangaben zu einem Bild zusammen, dessen Ortsauflösung über die optische Auflösung hinaus gesteigert ist. Es enthält allerdings nur Informationen über die zuvor aktivierte Teilmenge der Markermoleküle.

In einem sechsten Schritt S6 wird das Bild in ein Gesamtbild eingestellt. Anschließend wird zu Schritt S1 zurückgesprungen, wobei die bisher fluoreszierenden Moleküle wieder deaktiviert sind. Eine Deaktivierung kann je nach Markermolekülart durch eine separate Strahlung oder durch Abklingen des Aktivierungszustandes erreicht werden. Auch ist es möglich bereits abgebildete Markermoleküle durch Anregungsstrahlung zu bleichen.

Mit jedem Durchlauf wird so ein weiteres Bild erhalten, das zum Gesamtbild beiträgt. Im nächsten Durchlauf werden (auch) andere Markermoleküle isoliert und lokalisiert, z. B. die in Fig. 4 dargestellt Menge I_n+1.

Durch den mehrfachen Durchlauf durch die Schritte S1 bis S6 wird das Gesamtbild aus Bildern der einzelnen Durchläufe aufgebaut, welche die Ortsangaben der Markermoleküle 1 mit einer Ortsauflösung angeben, die gegenüber der Auflösung der optischen Abbildung geschärft ist. Durch eine entsprechende Anzahl von Iterationen baut sich somit ein hochaufgelöstes Gesamtbild sukzessive auf..

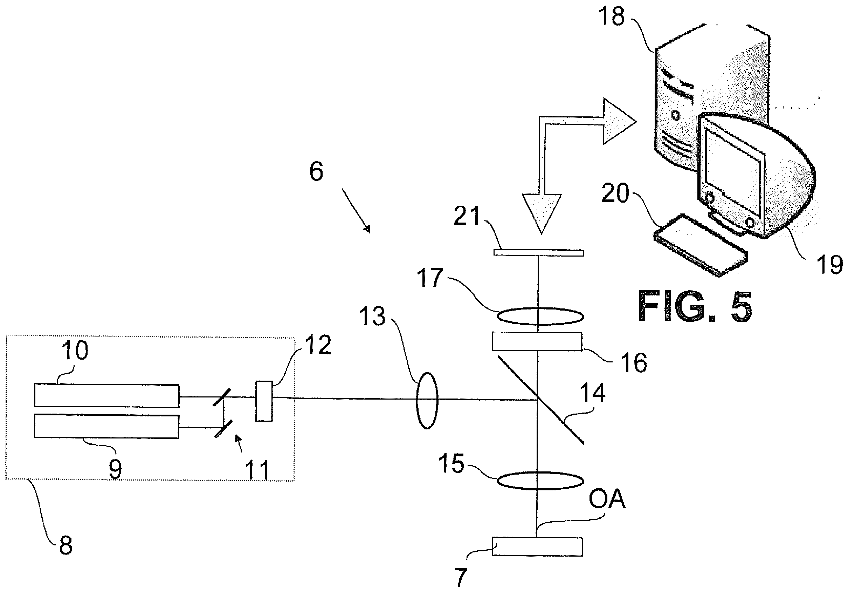

Fig. 5 zeigt schematisch ein Mikroskop 6 zur hochauflösenden Abbildung einer Probe 7. Das Mikroskop 6 ist zur Ausführung des PALM-Verfahrens ausgebildet. Die Probe 7 wird im Weitfeld mit einem Objektiv 15 auf einen Detektor 21 abgebildet. Das Objektiv 15 legt dabei eine Fokusebene fest, die auf bekannte Weise von einem Tiefenschärfenbereich umgeben ist, der von der konkreten Ausgestaltung des Objektivs 15 abhängt.

Die Probe 7 ist beispielsweise mit dem Farbstoff DRONPA (vergleiche WO 2007009812 A1) markiert. Zur Aktivierung sowie zur Fluoreszenzanregung weist das Mikroskop 6 eine Strahlungsquelle 8 auf, die über einzelne Laser 9 und 10 verfügt, deren Strahlen über einen Strahlvereiniger 11 zusammengeführt wird. Die Laser 9 und 10 können beispielsweise bei 405 nm (Aktivierungsstrahlung) und 488 nm (Fluoreszenzanregung und Deaktivierung) Strahlung abgeben. Es sind auch Farbstoffe bekannt (z. B. der Farbstoff namens DENDRA (vgl. Gurskaya et al., Nature Biotech., Band 24, S. 461-465, 2006)), bei denen die Aktivierung und Fluoreszenzanregung bei ein- und derselben Wellenlänge erfolgen kann. Dann genügt ein einziger Laser.

Es ist nur exemplarisch und nicht einschränkend, dass Aktivierung und Anregung mit Strahlung verschiedener Wellenlänge durchgeführt werden. Dies kann auch anders sein, wie dies vorgehend im einleitenden Teil der Beschreibung am Beispiel von Markermolekülen, die einen langlebigen, nicht fluoreszierenden Zustand und einen kurzlebigen, fluoreszierenden Zustand aufweisen, beschrieben wurde. Aktivierungs- und Anregungsstrahlung sind folglich optional hinsichtlich ihrer Wellenlänge gleich und unterscheiden sich in Zeitpunkt und Intensität der Einstrahlung. Die Strahlungsquelle 8 des Mikroskops 6 benötigt dann nur die Mittel für eine Wellenlänge. Z. B. können der Laser 10, der Strahlvereiniger 11 und der Filter 12 dann entfallen.

Im Betrieb mit zwei oder mehr Wellenlängen dient der akustisch-optische Filter 12 zur Wellenlängenselektion und zum schnellen Schalten oder Abschwächen einzelner Laserwellenlängen. Eine Optik 13 fokussiert die Strahlung über einen dichroitischen Strahlteiler 14 in eine Pupille eines Objektivs 15, so dass auf der Probe 7 die Strahlung der Strahlungsquelle 8 als Weitfeldbeleuchtung einfällt.

In der Probe 7 entstehende Fluoreszenzstrahlung wird über das Objektiv 15 eingesammelt. Der dichroitische Strahlteiler 14 ist so ausgelegt, dass er die Fluoreszenzstrahlung passieren lässt, so dass sie durch ein Filter 16 zu einer Tubuslinse 17 gelangt, so dass insgesamt die fluoreszierende Probe 7 auf den Detektor 21 abgebildet wird.

Zur Steuerung des Betriebs des Mikroskops 6 ist eine Steuereinrichtung vorgesehen, hier als Computer 18 mit Anzeige 19 und Tastatur 20 ausgebildet. Die Verfahrensschritte S2 bis S6 erfolgen in der Steuereinrichtung, z. B dem Computer 18. Dabei ist die Bildrate des Matrix-Detektors ausschlaggebend für die Gesamtmesszeit, so dass ein Matrix-Detektor 5 mit möglichst hoher Bildrate vorteilhaft ist, um die Messzeit zu reduzieren.

Das beschriebene Verfahren realisiert mit dem Mikroskop 6 ein Gesamtbild, das z. B. eine um Faktor 10 gegenüber der optischen Auflösung des Mikroskops gesteigerte Ortsauflösung hat. Die optische Auflösung des Mikroskops 6 kann beispielsweise 250 nm lateral und 500 nm axial betragen.

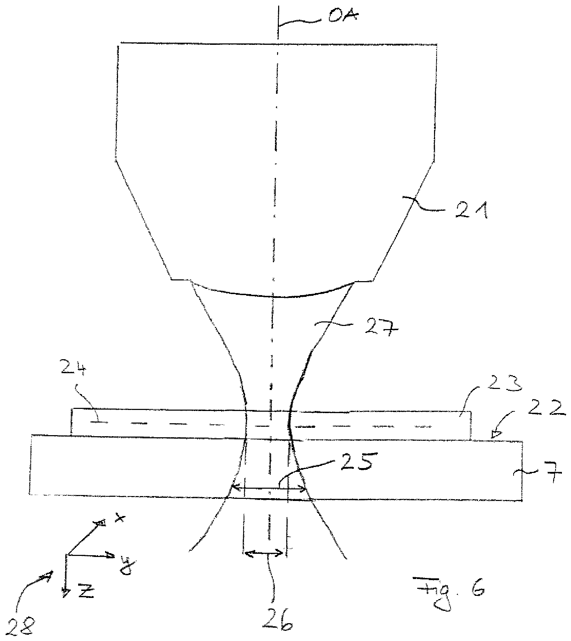

Fig. 1 zeigt das Beugungsscheibchen 2 eines abgebildeten Markermoleküls 1 in zweidimensionaler Darstellung. Für die Größe des Abbildes des Markermoleküls 1 ist die Tiefenlage des Markermoleküls von Relevanz. Fig. 6 veranschaulicht diesen Umstand. Sie zeigt schematisch eine Schnittdarstellung durch die Probe 7, die vom Objektiv 21 entlang einer optischen Achse OA abgebildet wird. Längs der optischen Achse OA verläuft die Tiefenkoordinate der Abbildung. Sie ist die z-Koordinate eines in Fig. 6 schematisch eingezeichneten Koordinatensystems 28. Die senkrecht dazu liegenden Koordinaten x, y spannen die Ebene auf, in der in Fig. 1 und 2 die Abbildung der Beugungsscheibchen 2 dargestellt wurde. Die Abbildung mittels des Objektivs 21 hat eine Fokusebene 24, um die herum ein Tiefenschärfebereich gegeben ist. Dieser rührt daher, dass die Abbildung eine Strahltaille 27 mit sich bringt. Diese legt die Größe des Beugungsscheibchens 2 fest. Wie man leicht sieht, variiert die Größe des Beugungsscheibchens abhängig von der Tiefenlage, d. h. der z-Koordinate längs der optischen Achse OA. Bei optimalen Bedingungen ist das Beugungsscheibchen 2 kreisförmig und das relevante Größenmaß, welches mit der z-Koordinate variiert, ist der Durchmesser 25. Der Strahltaillendurchmesser 27, welcher im Bereich der Fokusebene 24 vorliegt, kann prinzipiell nicht unterschritten werden.

Es ist deshalb möglich, den Durchmesser bzw. die Größe des Beugungsscheibchens 2 als Maß für die Tiefenlage, d. h. die z-Koordinate anzugeben. Wie man jedoch anhand der Fig. 6 deutlich sieht, bewirkt die Strahltaille 27, dass die Größe eines Beugungsscheibchens mit zunehmendem Abstand von der Fokusebene 24 zunimmt. Die Größe erlaubt hingegen per se keine Angabe über die Richtung, in der ein leuchtendes Markierungsmolekül von der Fokusebene 24 beabstandet ist.

Die Probe 7 hat eine Probenoberseite 22, die in der exemplarischen Darstellung der Fig. 6 durch ein Deckglas 23 (die Dickenverhältnisse sind in keiner Weise maßstäblich) abgedeckt wurde. Zur Tiefenauflösung beim eingangs geschilderten PALM-Verfahren wird deshalb die Fokusebene 24 bewusst oberhalb der Probenoberseite 22 eingestellt, beispielsweise in das Deckglas 23. Durch diese Maßnahme ist dafür gesorgt, dass es keine zwei Markierungsmoleküle geben kann, die leuchten und um einen identischen Abstand, jedoch in unterschiedlicher Richtung von der Fokusebene 24 entfernt liegen. Die Größe des Beugungsscheibchens erlaubt eine eindeutige Zuordnung zur z-Koordinate. Es wird deshalb im Schritt S4 auch die Größe des Beugungsscheibchens 2 ausgewertet. Das Zentrum des Beugungsscheibchens 2 liefert die Koordinaten in x,y-Richtung. Die Größe die z-Koordinate. Je größer beispielsweise der Durchmesser 25 des Beugungsscheibchens 2, desto größer ist der Abstand von der Fokusebene 24. In einer Ausführungsform ist die z-Lage der Fokusebene 24 bekannt, z. B. aus einer anderweitigen Messung oder Betriebsparametern des Mikroskops. Die z-Koordinate der leuchtenden, isolierten Markermoleküle 1 wird dann auf diese z-Lage bezogen. Man gewinnt damit eine absolute Angabe.

In einer anderen, bevorzugten Ausgestaltung wird ein Relativmaß bezogen auf die Probenoberseite 22 gewonnen, indem in den Einzelbildern 5 nach dem Beugungsscheibchen 2 mit dem kleinsten Durchmesser 26 gesucht wird. Dessen Markermolekül 1 muss zwangsläufig unmittelbar auf der Probenoberseite 22 liegen. Die Tiefenangabe der dreidimensional lokalisierten Markermoleküle 1 erfolgt dann relativ zur Probenoberseite, indem aus dem Unterschied zwischen dem kleinsten Durchmesser 26 und dem aktuellen Durchmesser 25 eines leuchtenden Markermoleküls 1 ein Maß für den z-Abstand des betreffenden leuchtenden, isolierten Markermoleküls 1 von der Probenoberseite 22 ermittelt wird.

In Fig. 6 ist exemplarisch gezeigt, dass die Fokusebene 24 in ein Deckglas 23 gelegt wird. Dies ist nicht zwingend erforderlich. Es genügt, wenn sichergestellt ist, dass die Fokusebene 24 außerhalb der Probe 7 angeordnet ist. In Fig. 6 ist ebenfalls gezeigt, dass bezogen auf die Lage der Probenoberseite 22 die Abbildung mit dem Mikroskop 15 von oben erfolgt. Eine invertierte Bauweise ist jedoch gleichermaßen möglich. Der Begriff "Probenoberseite" soll deshalb keine Ausrichtungsvorgabe für die Probe 2 - weder absolut, noch in Relation zum Objektiv 15 - sein.

In der Bauweise der Fig. 6 erfolgt die Beleuchtung der Aktivierungs- und Anregungsstrahlung durch das Objektiv 15. Auch dies ist nicht zwingend erforderlich. Wesentlich ist lediglich, dass die Abbildung mit dem Objektiv 15 so erfolgt, dass die Fokusebene 24 außerhalb der Probe 7 liegt. Die Beleuchtung der Probe, insbesondere die Aktivierung und/oder die Anregung kann auch in einer anderen Richtung erfolgen, beispielsweise durch ein weitgehend senkrecht zur optischen Achse OA eingestrahltes Lichtblatt oder durch eine TIRF-artige Beleuchtung, wie sie beispielsweise in Tokunaga, Nature Methods 5, Seite 259 ff, 2008 beschrieben und dort als "highly inclined and laminated optical sheet" bezeichnet ist.

Obige Beschreibung spricht hinsichtlich der Fluoreszenzemitter von Markermolekülen. Dieser Begriff soll nicht einschränkend aufgefasst werden, sondern dient lediglich als Beispiel für Moleküle, Molekülkomplexe, Proteine oder andere Eiweißstrukturen, die in der Probe vorhanden sind und die geeigneten Fluoreszenzemittereigenschaften haben. Markermoleküle können somit sowohl nachträglich der Probe in einem Probenpräparationsschritt hinzugefügte Bestandteile sein, als auch bereits inhärent in der Probe vorhandene Elemente. Entsprechende Probenpräparationen für das PALM-Verfahren sind im Stand der Technik bekannt.

## Patentansprüche

1. Verfahren zur 3D-hochauflösenden Lokalisierungsmikroskopie, bei dem
- eine Probe (7) verwendet wird, die eine abbildungsseitige Begrenzungsfläche (22) aufweist,
- in einem Anregungsschritt die Probe (7) mit Anregungsstrahlung beleuchtet wird, um in der Probe (7) Fluoreszenzmarker zum Leuchten anzuregen,
- in einem Abbildungsschritt die Probe (7) mittels einer Abbildungsoptik (15, 17) längs einer Abbildungsrichtung in ein Einzelbild (5) abgebildet wird, wobei das Einzelbild Abbilder (2) der leuchtenden Fluoreszenzmarker (1) enthält und die Abbildungsoptik (15, 17) eine optische Auflösung aufweist,
- der Anregungs- und der Abbildungsschritt mehrmals wiederholt werden und so mehrere Einzelbilder (5) erzeugt werden, wobei die Anregungsschritte so ausgeführt werden, dass zumindest für einen Teil der leuchtenden Fluoreszenzmarker (1) deren Abbilder (2) in jedem der Einzelbilder (5) isoliert sind,
- in den erzeugten, mehreren Einzelbildern (5) aus den isolierten Abbildern (2) der leuchtenden Fluoreszenzmarker (1) jeweils eine Ortsangabe des entsprechenden Fluoreszenzmarkers (1) ermittelt wird, die eine Genauigkeit hat, welche über die optische Auflösung hinausgeht,
- aus den so ermittelten Ortsangaben ein hochaufgelöstes Gesamtbild erzeugt wird,
**dadurch gekennzeichnet, dass**
- die Abbildungsoptik (15, 17) genau eine Fokusebene (24) aufweist,
- die Abbildungsoptik (15, 17) so eingestellt wird, dass die Fokusebene (24) in Abbildungsrichtung außerhalb der Probe zwischen der Begrenzungsfläche (22) und der Abbildungsoptik liegt, und
- in den Einzelbildern (5) die isolierten Abbilder (2) der leuchtenden Fluoreszenzmarker (1) hinsichtlich ihrer Größe (25) analysiert werden und aus der Größe (25) eine Angabe über eine Tiefenlage, die angibt, wie weit der entsprechende leuchtende Fluoreszenzmarker (1) längs der Abbildungsrichtung unter der Begrenzungsfläche (22) liegt, abgeleitet wird.

2. Verfahren nach Anspruch 1, **dadurch gekennzeichnet, dass** diejenigen isolierten Abbilder (2) der leuchtenden Fluoreszenzmarker (1) gesucht werden, die die kleinste Größe (26) haben, und die Tiefenlage dieser Fluoreszenzmarker (1) als auf der Begrenzungsfläche (22) liegend angegeben wird.

3. Verfahren nach Anspruch 2, **dadurch gekennzeichnet, dass** für diejenigen isolierten Abbilder (2) der leuchtenden Fluoreszenzmarker (1), die eine Größe (25) über der kleinsten Größe (25) haben, die Angabe über die Tiefenlage auf die Begrenzungsfläche (22) bezogen wird.

4. Verfahren nach einem der obigen Ansprüche, **dadurch gekennzeichnet, dass** die Anregungsstrahlung als Lichtblatt (27) eingestrahlt wird.

5. Verfahren nach einem der obigen Ansprüche, **dadurch gekennzeichnet, dass** die Abbildungsoptik ein Objektiv (15) aufweist und die Anregungsstrahlung durch das Objektiv (15) eingestrahlt wird.

6. Verfahren nach Anspruch 5, **dadurch gekennzeichnet, dass** die Anregungsstrahlung als Weitfeldbeleuchtung eingestrahlt wird.

7. Verfahren nach einem der obigen Ansprüche, **dadurch gekennzeichnet, dass** die Probe (7) mit einem Deckglas (23) abgedeckt und die Abbildungsoptik (15, 17) so eingestellt wird, dass die Fokusebene (24) im Deckglas (23) liegt.

8. Verfahren nach einem der obigen Ansprüche, **dadurch gekennzeichnet, dass** die Abbilder (2) hinsichtlich ihrer Größe (25) analysiert werden, indem eine Fläche und/oder eine maximale oder minimale Abmessung des Abbildes (2) ermittelt und als Maß für die Größe (25) verwendet wird.

9. Verfahren nach einem der Ansprüche 1 bis 7, **dadurch gekennzeichnet, dass** eine Punktbildverwaschungsfunktion aus zuvor bestimmten experimentellen Daten oder einem Modell ausgewertet wird, wobei ein Punktbildverwaschungsabbild eines punktförmigen, leuchtenden Elementes bestimmt wird, und das Punktbildverwaschungsabbild in Abbildungsrichtung verschoben wird, bis ein Schnitt des Punktbildverwaschungsabbildes eine bestmögliche Übereinstimmung mit dem Abbild (2) des entsprechenden, leuchtenden Fluoreszenzmarkers (1) hat.

## Claims

1. Method for high-resolution 3D localization microscopy, wherein
- a sample (7) having an imaging-side boundary surface (22) is used,
- in an excitation step, the sample (7) is illuminated with excitation radiation in order to excite fluorescence markers in the sample (7) to emit light,
- in an imaging step, the sample (7) is imaged into a frame (5) along an imaging direction by means of an imaging optical unit (15, 17), wherein the frame contains image representations (2) of the light-emitting fluorescence markers (1) and the imaging optical unit (15, 17) has an optical resolution,
- the excitation and imaging steps are repeated more than once to produce a plurality of frames (5), wherein the excitation steps are performed such that, at least for some of the light-emitting fluorescence markers (1), their image representations (2) are isolated in each of the frames (5),
- in each case a location statement for the corresponding fluorescence marker (1) is ascertained from the isolated image representations (2) of the light-emitting fluorescence markers (1) in the plurality of frames (5) produced, which statement has an accuracy that goes beyond the optical resolution,
- a high-resolution overall image is produced from the location statements thus ascertained,
**characterized in that**
- the imaging optical unit (15, 17) has exactly one focal plane (24),
- the imaging optical unit (15, 17) is set in a way such that the focal plane (24) lies in the imaging direction outside the sample between the boundary surface (22) and the imaging optical unit, and
- the isolated image representations (2) of the light-emitting fluorescence markers (1) in the frames (5) are analysed with respect to their size (25), and, from the size (25), a statement regarding a depth location is derived which indicates how far below the boundary surface (22) the corresponding light-emitting fluorescence marker (1) lies along the imaging direction.

2. Method according to Claim 1, **characterized in that** a search is performed for the isolated image representations (2) of the light-emitting fluorescence markers (1) that have the smallest size (26), and the depth location of these fluorescence markers (1) is specified as lying on the boundary surface (22).

3. Method according to Claim 2, **characterized in that** for the isolated image representations (2) of the light-emitting fluorescence markers (1) that have a size (25) greater than the smallest size (25), the statement regarding the depth location is with respect to the boundary surface (22).

4. Method according to any of the above claims, **characterized in that** the excitation radiation is radiated in in the form of a light sheet (27).

5. Method according to any of the above claims, **characterized in that** the imaging optical unit has an objective (15) and the excitation radiation is radiated in through the objective (15).

6. Method according to Claim 5, **characterized in that** the excitation radiation is radiated in as widefield illumination.

7. Method according to any of the above claims, **characterized in that** the sample (7) is covered with a coverslip (23) and the imaging optical unit (15, 17) is set in a way such that the focal plane (24) lies in the coverslip (23).

8. Method according to any of the above claims, **characterized in that** the image representations (2) are analysed with regard to their size (25) by ascertaining a surface area and/or a maximum or minimum dimension of the image representation (2) and using it as a measure of the size (25)

9. Method according to any of Claims 1 to 7, **characterized in that** a point spread function from previously determined experimental data or a model is evaluated, wherein a point spread image representation of a point-shaped, light-emitting element is determined, and the point spread image representation is shifted in the imaging direction until a section of the point spread image representation has the best possible match with the image representation (2) of the corresponding, light-emitting fluorescence marker (1).

## Revendications

1. Procédé de localisation par microscopie 3D à haute résolution, dans lequel
- un échantillon (7) qui présente une surface de délimitation (22) côté formation d'image est utilisé,
- au cours d'une étape d'excitation, l'échantillon (7) est éclairé par un rayonnement d'excitation afin d'exciter des marqueurs fluorescents dans l'échantillon (7) à des fins d'éclairage,
- au cours d'une étape de formation d'image, une image de l'échantillon (7) est formée sous forme d'une image individuelle (5) au moyen d'une optique de formation d'image (15, 17) dans une direction de formation d'image, dans lequel l'image individuelle contient des images (2) des marqueurs fluorescents lumineux (1) et l'optique de formation d'image (15, 17) présente une résolution optique,
- les étapes d'excitation et de formation d'image sont répétées plusieurs fois et plusieurs images individuelles (5) sont ainsi générées, dans lequel les étapes d'excitation sont réalisées de manière à ce qu'au moins pour une partie des marqueurs fluorescents lumineux (1), leurs images (2) soient isolées dans chacune des images individuelles (5),
- dans les multiples images individuelles (5) générées, à partir des images (2) isolées des marqueurs fluorescents lumineux (1), une indication de localisation du marqueur fluorescent (1) correspondant est respectivement déterminée, laquelle présente une précision dépassant la résolution optique,
- à partir des indications de localisation ainsi déterminées, une image globale à haute résolution est générée,
**caractérisé en ce que**
- l'optique de formation d'image (15, 17) comporte exactement un plan focal (24),
- l'optique de formation d'image (15, 17) est réglée de manière à ce que le plan focal (24) se situe dans la direction de formation d'image à l'extérieur de l'échantillon entre la surface de délimitation (22) et l'optique de formation d'image, et
- dans les images individuelles (5), les images isolées (2) des marqueurs fluorescents lumineux (1) sont analysées en ce qui concerne leur taille (25) et, à partir de la taille (25), une indication concernant une position en profondeur est déduite, laquelle indique à quelle distance le marqueur fluorescent lumineux correspondant (1) se trouve sous la surface de délimitation (22) dans la direction de représentation.

2. Procédé selon la revendication 1, **caractérisé en ce que** les images isolées (2) des marqueurs fluorescents lumineux (1) qui présentent la plus petite taille (26) sont recherchées et **en ce que** la position en profondeur de ces marqueurs fluorescents (1) est indiquée comme se situant sur la surface de délimitation (22).

3. Procédé selon la revendication 2, **caractérisé en ce que**, pour les images isolées (2) des marqueurs fluorescents lumineux (1) qui présentent une taille (25) supérieure à la plus petite taille (25), l'indication de la position en profondeur est définie par rapport à la surface de délimitation (22).

4. Procédé selon l'une quelconque des revendications précédentes, **caractérisé en ce que** le rayonnement d'excitation est émis sous la forme d'une nappe de lumière (27).

5. Procédé selon l'une quelconque des revendications précédentes, **caractérisé en ce que** l'optique de formation d'image comporte un objectif (15) et **en ce que** le rayonnement d'excitation est émis à travers l'objectif (15) .

6. Procédé selon la revendication 5, **caractérisé en ce que** le rayonnement d'excitation est émis sous la forme d'un éclairage à grand champ.

7. Procédé selon l'une quelconque des revendications précédentes, **caractérisé en ce que** l'échantillon (7) est recouvert d'un verre de protection (23) et **en ce que** l'optique de formation d'image (15, 17) est réglée de manière à ce que le plan focal (24) se situe dans le verre de protection (23).

8. Procédé selon l'une quelconque des revendications précédentes, **caractérisé en ce que** les images (2) sont analysées en ce qui concerne leur taille (25), en déterminant une surface et/ou une dimension maximale ou minimale de l'image formée (2) et en l'utilisant en tant que mesure de la taille (25).

9. Procédé selon l'une quelconque des revendications 1 à 7, **caractérisé en ce qu'**une fonction de flou d'image ponctuelle est évaluée à partir de données expérimentales ou d'un modèle déterminés au préalable, dans lequel une image d'étalement d'image ponctuelle d'un élément lumineux ponctuel est déterminée, et l'image d'étalement d'image ponctuelle est déplacée dans la direction de l'image jusqu'à ce qu'une coupe de l'image d'étalement d'image ponctuelle présente la meilleure correspondance possible avec l'image (2) du marqueur fluorescent lumineux correspondant (1).
